# DEMANDE DE BREVET EUROPEEN

(11) **EP 0 682 420 A1**
(43) Date de publication de la demande: **15.11.1995**
(21) Numéro de dépôt: 95401065.8
(22) Date de dépôt: 09.05.1995
(51) Int. Cl.: H04B 7/005

(54) **Dispositif d'estimation de la qualité d'un canal de transmission dans un récepteur numérique**

(30) Priorité: 11.05.1994 FR 9405822
(71) Demandeur: ALCATEL MOBILE COMMUNICATION FRANCE, 75008 Paris (FR)
(72) Inventeur: Mourot, Christophe, F-92600 Asnieres (FR)
(74) Mandataire: El Manouni, Josiane

(57) **Abrégé**

L'invention concerne un dispositif d'estimation de la qualité d'un canal de transmission (1) pour un récepteur (4) d'un système de transmission numérique, ledit récepteur (4) comprenant des moyens (5) d'estimation de la réponse impulsionnelle du canal de transmission sous la forme d'un jeu (9) de coefficients de réponse impulsionnelle hᵢ, où i varie de 0 à L, L étant la longueur du canal de transmission (1) en nombre de période-symboles.

Le dispositif selon l'invention comprend des moyens (8) de calcul d'une valeur estimée (Q) de la qualité du canal de transmission (1), par comparaison entre une première information caractéristique du premier coefficient de réponse impulsionnelle h₀ et une seconde information caractéristique des autres coefficients de réponse impulsionnelle hⱼ, j variant de 1 à L.

La valeur estimée (Q) de la qualité du canal de transmission (1) est par exemple le rapport entre le carré du module du premier coefficient de réponse impulsionnelle h₀ et la somme des carrés des modules des autres coefficients de réponse impulsionnelle hⱼ.

## Description

Le domaine de l'invention est celui de la transmission de données numériques. Plus précisément, l'invention concerne un dispositif d'estimation de la qualité d'un canal de transmission pour un récepteur d'un système de transmission numérique.

Dans un système de transmission numérique, notamment par ondes radio, un émetteur émet une séquence de symboles dans un canal de transmission à destination d'un récepteur. La séquence émise subit des altérations dans le canal de transmission, si bien que la séquence de symboles reçus par le récepteur ne lui est pas identique.

La principale de ces altérations est l'interférence entre symboles qui est due au fait qu'un symbole émis peut emprunter plusieurs trajets dans le canal de transmission. En effet, si deux trajets au moins présentent un écart supérieur à la distance séparant deux symboles émis successivement, un symbole empruntant un de ces trajets va venir interférer avec un symbole suivant empruntant un autre trajet plus court.

Pour corriger l'interférence entre symboles, dans le récepteur, on utilise un égaliseur qui, pour fonctionner correctement, doit connaître la réponse impulsionnelle du canal de transmission.

A cette fin, on émet une séquence d'apprentissage constituée de symboles connus, par opposition aux symboles de données qui font l'objet de la transmission et qui, par hypothèse, ne sont pas connus du récepteur. Il est ainsi courant de prévoir qu'un paquet de symboles destiné à un récepteur particulier comprenne successivement des symboles de données, une séquence d'apprentissage et de nouveau des symboles de données, la séquence d'apprentissage étant ainsi disposée au centre du paquet.

La séquence d'apprentissage est choisie en fonction des caractéristiques du canal de transmission et plus particulièrement en fonction de sa longueur.

En effet, compte-tenu du fait que les symboles sont émis régulièrement et présentent donc une périodicité que l'on nomme période-symbole, la longueur du canal se définit comme le nombre de période-symboles qui est équivalent à la différence du trajet le plus long et du trajet le plus court de ce canal.

Dans le récepteur, un dispositif d'estimation de la réponse impulsionnelle du canal génère une réplique de cette séquence d'apprentissage et la corrèle avec la séquence correspondante de symboles reçus. Le résultat de la corrélation est un jeu de coefficients de réponse impulsionnelle hᵢ , où i varie de 0 à L, L étant la longueur du canal. Dans ce jeu de coefficients, prévu pour renseigner l'égaliseur, le trajet le plus direct du canal est représenté par h₀, tandis que les autres représentent les trajets plus longs qui produisent des interférences avec le premier.

Dans le cas le plus général, ces coefficients sont de nature complexe car les symboles reçus peuvent se décomposer sur la base orthogonale en deux composantes, l'une dite "en phase" et l'autre "en quadrature".

Dans les récepteurs connus, une estimation de la qualité du canal de transmission est obtenue par mesure du niveau de signal reçu ou encore par calcul du taux d'erreur binaire sur des symboles reçus. Mais les estimations de qualité ainsi obtenues ne permettent pas de savoir si tous les traitements prévus en réception sont vraiment nécessaires.

On connaît également, dans l'état de la technique, un dispositif de contrôle de l'activation d'un égaliseur en fonction d'un jeu de coefficients de réponse impulsionnelle fourni par un dispositif d'estimation de la réponse impulsionnelle du canal et destiné à l'égaliseur.

Le fonctionnement de ce dispositif de contrôle est le suivant: on supprime tous les coefficients dont le carré du module est inférieur à un seuil, et on n'utilise pas l'égaliseur si tous les coefficients sont supprimés sauf le premier. En effet, dans ce cas, la qualité de ce canal de transmission est jugée très bonne et l'égaliseur est inutile. Son utilisation aurait même plutôt tendance à dégrader la qualité des données reçues, notamment en retirant de l'interférence entre symboles là où il n'y en a pas en réalité.

Un tel dispositif de contrôle ne permet pas de fournir une valeur estimée de la qualité du canal de transmission mais simplement de prendre une décision binaire, pour savoir si l'égaliseur doit être utilisé ou non. Or, la connaissance d'une telle valeur estimée de la qualité du canal de transmission est nécessaire pour de nombreuses applications, et notamment pour savoir si tous les traitements prévus en réception sont vraiment nécessaires.

L'invention a notamment pour objectif de pallier ces différents inconvénients de l'état de la technique.

Plus précisément, l'un des objectifs de la présente invention est de fournir un dispositif d'estimation de la qualité d'un canal de transmission pour un récepteur d'un système de transmission numérique, ce dispositif devant être très simple à réaliser.

L'invention a également pour objectif de fournir un tel dispositif qui permette de savoir si les traitements prévus en réception (égalisation, par exemple) sont utiles ou non.

Ces différents objectifs, ainsi que d'autres qui apparaîtront par la suite, sont atteints selon l'invention à l'aide d'un dispositif d'estimation de la qualité d'un canal de transmission pour un récepteur d'un système de transmission numérique, ledit récepteur comprenant des moyens d'estimation de la réponse impulsionnelle du canal de transmission sous la forme d'un jeu de coefficients de réponse impulsionnelle hᵢ, où i varie de 0 à L, L étant la longueur du canal de transmission en nombre de période-symboles,
ledit dispositif comprenant des moyens de calcul d'une valeur estimée de la qualité du canal de transmission, par comparaison entre une première information caractéristique du premier coefficient de réponse impulsionnelle h₀ et une seconde information caractéristique des autres coefficients de réponse impulsionnelle hⱼ, j variant de 1 à L.

Le principe de l'invention est donc de comparer le premier coefficient de réponse impulsionnelle à l'ensemble des autres coefficients pour estimer la qualité du canal de transmission. Le premier coefficient h₀ représente la pondération de l'information utile alors que les autres coefficients h₁ à h_{L} représentent la pondération de l'interférence entre symboles. En effet, un symbole yₜ reçu à un instant t peut être décomposé comme la somme :
- du résultat (h₀.xₜ) de la pondération par le premier coefficient h₀ du symbole émis correspondant xₜ;
- de l'interférence entre symboles, c'est-à-dire du résultat (h₁.xₜ₋₁ + ... + h_{L}.x_{t-L}) de la pondération par les autres coefficents h₁ à h_{L} des symboles xₜ₋ᵢ, i ε [1,L], émis après le symbole corespondant xₜ; et
- d'un bruit blanc additif gaussien nₜ.

On a donc : yₜ = h₀.xₜ + (h₁.xₜ₋₁ + ... + h_{L}.x_{t-L}) + nₜ.

Avantageusement, ladite valeur estimée de la qualité du canal de transmission est le rapport entre le carré du module du premier coefficient de réponse impulsionnelle h₀ et la somme des carrés des modules des autres coefficients de réponse impulsionnelle hⱼ.

De cette façon, la valeur estimée de la qualité du canal de transmission est définie comme un rapport de puissance.

Préférentiellement, ledit jeu de coefficients de réponse impulsionnelle comprend éventuellement au moins un coefficient nul, un coefficient nul étant un coefficient dont le module a préalablement été annulé par les moyens d'estimation de la réponse implulsionnelle parce que le carré de ce module était inférieur à une valeur seuil prédéterminée de carré de module.

Ainsi, tout en bénéficiant d'une longueur de canal importante, on diminue le nombre des coefficients de corrélation en annulant ceux qui n'apportent pas d'information sur le canal de transmission. C'est le cas, par exemple, des coefficients correspondant aux trajets qui présentent le plus mauvais rapport signal à bruit. De plus, la probabilité que le dispositif d'estimation de la réponse impulsionnelle fournisse un coefficient de corrélation hᵢ égal à zéro est pratiquement nulle, ne serait-ce qu''en raison du bruit de calcul. Or, dans la réalité, un tel coefficient à une probabilité non nulle de valoir zéro. L'invention permet ici de forcer ce coefficient à zéro s'il a une valeur très faible, et évite ainsi de faire apparaître de l'interférence entre symboles là où il n'y en a pas.

De façon avantageuse, ladite valeur seuil prédéterminée de carré de module est fonction d'une estimation du rapport signal à bruit.

Ainsi, par exemple, si le rapport signal à bruit est suffisamment élevé, on peut décider de réduire la valeur seuil de carré de module (voire l'annuler) de façon à prendre en compte de faibles coefficients qui correspondent effectivement à de l'interférence entre symboles.

L'invention concerne également l'utilisation du dispositif d'estimation de la qualité d'un canal de transmission pour le contrôle de l'activation d'un égaliseur recevant ledit jeu de coefficients de réponse impulsionnelle hᵢ.

Avantageusement, une plage d'activation de l'égaliseur est définie entre deux valeurs seuil minimale et maximale de qualité acceptable, ledit égaliseur étant activé si ladite valeur estimée de la qualité du canal de transmission est comprise dans ladite plage d'activation.

De cette façon, I'égaliseur n'est pas utilisé quand la qualité du canal de transmission est très bonne (dans ce cas, l'égaliseur risque de dégrader cette qualité en retirant de l'interférence entre symboles là où il n'y en a pas), ni quand elle est très mauvaise (dans ce cas, l'égaliseur ne peut rien faire).

Enfin, l'invention concerne aussi l'utilisation du dispositif d'estimation de la qualité d'un canal de transmission pour l'une des applications appartenant au groupe comprenant :
- l'estimation des performances d'un égaliseur recevant ledit jeu de coefficients de réponse impulsionnelle hᵢ ;
- le contrôle de la puissance d'émission d'un signal ; et
- le contrôle d'un changement de cellule, dans le cas d'un système de radiocommunication numérique cellulaire.

Ainsi, l'estimation des performances d'un égaliseur permet par exemple de dimensionner dynamiquement cet égaliseur, ou tout autre élément en aval de la chaîne de réception.

La puissance d'émission pouvant être contrôlée est soit celle d'un émetteur distant (par exemple, dans le cas d'un mode duplex par division en fréquences, ou FDD), soit celle de l'émetteur local associé au récepteur et/ou d'un émetteur distant (par exemple, dans le cas d'un mode duplex par division en temps, ou TDD).

D'autres caractéristiques et avantages de l'invention apparaîtront à la lecture de la description suivante d'un mode de réalisation préférentiel de l'invention, donné à titre d'exemple indicatif et non limitatif, et des dessins annexés dans lesquels :
- la figure 1 présente de façon schématique un canal de transmission auquel est relié un récepteur comprenant un dispositif selon l'invention d'estimation de la qualité du canal de transmission ; et
- la figure 2 présente une courbe de variation du taux d'erreur binaire dans le récepteur de la figure 1 en fonction de la qualité du canal de transmission pouvant être mesurée par le dispositif de l'invention.

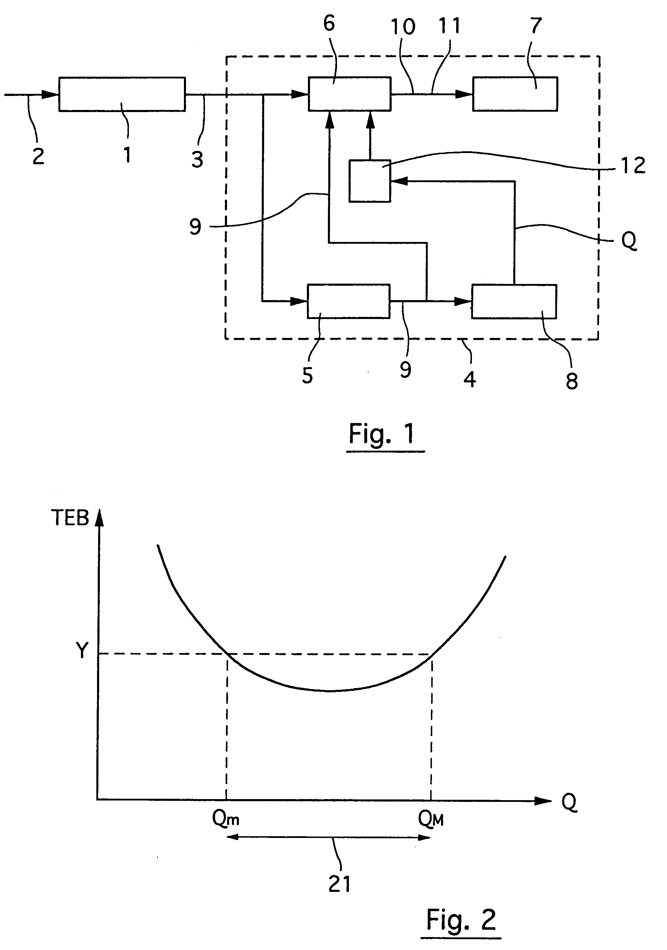

En référence à la figure 1, le canal de transmission 1 reçoit les symboles émis 2 et délivre les symboles reçus 3 au récepteur 4.

Le récepteur 4 comprend notamment :
- des moyens 5 d'estimation de la réponse impulsionnelle du canal de transmission 1 ;
- un égaliseur 6 ;
- un décodeur de canal 7 ; et
- un dispositif 8 selon l'invention d'estimation de la qualité du canal de transmission 1.

Les symboles 2 sont émis par paquets, chaque paquet comprenant des symboles de données et une séquence d'apprentissage constituée de symboles connus du récepteur 4.

Ainsi, pour chaque paquet de symboles reçus 3, les moyens 5 d'estimation de la réponse impulsionnelle du canal de transmission génèrent une réplique de la séquence d'apprentissage et la corrèlent avec la séquence correspondante de symboles reçus 3. Le résultat de la corrélation est un jeu 9 de coefficients de réponse impulsionnelle hᵢ, où i varie de 0 à L, L étant la longueur du canal de transmission 1 en nombre de périodes-symboles.

Une séquence de symboles de données reçus 3 peut ne pas être identique à la séquence de symboles de données émis 2. En effet, le canal de transmission 1 induit des altérations, et notamment de l'interférence entre symboles.

Le rôle de l'égaliseur 6 est précisément de réduire cette interférence entre symboles. L'égaliseur 6 utilise pour cela le jeu de 9 coefficients de réponse impulsionnelle hᵢ. Pour chaque symbole de données reçu 3, l'égaliseur 6 fournit au décodeur de canal une décision 10 (c'est-à-dire une valeur qui lui semble la plus correcte) et une appréciation 11 sur cette décision.

Il est clair que le récepteur 4 comprend de nombreux autres modules de traitement (notamment, en aval du décodeur de canal 7) qui, par souci de simplification, ne sont pas discutés ici, ni représentés sur la figure 1.

Le dispositif 8 selon l'invention d'estimation de la qualité du canal de transmission 1 comprend des moyens de calcul d'une valeur estimée Q de la qualité du canal de transmission à partir du jeu 9 de coefficients de réponse impulsionnelle hᵢ.

Cette valeur estimée Q de la qualité du canal de transmission est définie comme un rapport entre la puissance affectée au premier coefficient h₀ et la puissance affectée aux autres coefficients hⱼ (c'est-à-dire à l'interférence entre symboles). Cette valeur Q est par exemple le rapport entre le carré du module du premier coefficient de réponse impulsionnelle h₀ et la somme des carrés des modules des autres coefficients de réponse impulsionnelle hⱼ, j variant de 1 à L.

On peut prévoir de forcer à zéro les coefficients hⱼ possédant une valeur très faible, de façon à éviter de faire apparaître de l'interférence entre symboles là où il n'y en a pas.

En effet, la probabilité que les moyens d'estimation de la réponse impulsionnelle du canal de transmission fournissent un coefficient hⱼ égal à zéro est pratiquement nulle (notamment à cause du bruit de calcul). Or, en réalité, un tel coefficient a une probabilité non nulle de valoir zéro.

On peut par exemple annuler les coefficients dont le carré du module est inférieur à une valeur seuil, cette valeur seuil pouvant être fonction d'une estimation du rapport signal à bruit.

On peut bien sûr prévoir d'autres techniques permettant de limiter, si nécessaire, le nombre de coefficients non nuls.

Sur la figure 1, on a également présenté un exemple d'utilisation du dispositif 8 de l'invention. En effet, le récepteur 4 comprend des moyens 12 de contrôle de l'activation de l'égaliseur 6 en fonction de la valeur estimée Q de la qualité du canal de transmission.

La plage d'activation de l'égaliseur 6 est par exemple définie entre deux valeurs seuil minimale et maximale de qualité acceptable. En effet, la possibilité de définir une telle plage d'activation apparaît clairement sur la figure 2, qui présente une courbe de variation du taux d'erreur binaire dans le récepteur 4 en fonction de la valeur estimée Q de la qualité du canal de transmission.

Pour un niveau de performance acceptable, c'est-à-dire une valeur Y de taux d'erreur binaire (TEB) acceptable selon les contraintes de qualité imposées au système, il existe deux valeurs seuil Qₘ et Q_{M} de qualité du canal de transmission. La plage d'activation 21 de l'égaliseur est donc définie entre ces deux valeurs seuil Qₘ et Q_{M}.

Pour une valeur estimée Q inférieure à la valeur seuil minimale Qₘ, la qualité du canal de transmission est trop mauvaise pour que l'égaliseur 6 puisse corriger correctement les symboles reçus 3.

Pour une valeur estimée Q supérieure à la valeur seuil maximale Q_{M}, la qualité du canal de transmission est très bonne et l'utilisation de l'égaliseur 6 ne ferait que dégrader les symboles reçus.

Les valeurs seuil minimale Qₘ et maximale Q_{M} sont par exemple déterminées par simulation ou encore après des essais sur le terrain.

Le dispositif de l'invention, grâce à la valeur estimée Q de la qualité du canal de transmission qu"elle fournit, peut également être utilisé pour d'autres applications, et notamment pour :
- l'estimation des performances de l'égaliseur 6 ;
- le contrôle de la puissance d'émission d'un signal ; et
- le contrôle d'un changement de cellule (handover), dans le cas d'un système de radiocommunication numérique cellulaire.

Il est clair que le dispositif 8 d'estimation de la qualité d'un canal de transmission, décrit ci-dessus en relation avec la figure 1, peut être utilisé pour de nombreuses autres applications, sans sortir du cadre de l'invention. On peut notamment prévoir tous types d'actions permettant, en fonction d'une valeur estimée de la qualité Q du canal de transmission, de maintenir une qualité donnée, d'optimiser le format de transmission des symboles, d'optimiser le traitement en réception ou encore d'améliorer la consommation d'énergie.

## Revendications

1. Dispositif d'estimation de la qualité d'un canal de transmission (1) pour un récepteur (4) d'un système de transmission numérique, ledit récepteur (4) comprenant des moyens (5) d'estimation de la réponse impulsionnelle du canal de transmission sous la forme d'un jeu (9) de coefficients de réponse impulsionnelle hᵢ, où i varie de 0 à L, L étant la longueur du canal de transmission (1) en nombre de période-symboles,
caractérisé en ce qu'il comprend des moyens (8) de calcul d'une valeur estimée (Q) de la qualité du canal de transmission (1), par comparaison entre une première information caractéristique du premier coefficient de réponse impulsionnelle h₀ et une seconde information caractéristique des autres coefficients de réponse impulsionnelle hⱼ, j variant de 1 à L.

2. Dispositif selon la revendication 1, caractérisé en ce que ladite valeur estimée (Q) de la qualité du canal de transmission (1) est le rapport entre le carré du module du premier coefficient de réponse impulsionnelle h₀ et la somme des carrés des modules des autres coefficients de réponse impulsionnelle hⱼ.

3. Dispositif selon l'une quelconque des revendications 1 et 2, caractérisé en ce que ledit jeu (9) de coefficients de réponse impulsionnelle comprend éventuellement au moins un coefficient nul, un coefficient nul étant un coefficient dont le module a préalablement été annulé par les moyens (5) d'estimation de la réponse implulsionnelle parce que le carré de ce module était inférieur à une valeur seuil prédéterminée de carré de module.

4. Dispositif selon la revendication 3, caractérisé en ce que ladite valeur seuil prédéterminée de carré de module est fonction d'une estimation du rapport signal à bruit.

5. Utilisation du dispositif (8) d'estimation de la qualité d'un canal de transmission (1) selon l'une quelconque des revendications 1 à 4, pour le contrôle (12) de l'activation d'un égaliseur (6) recevant ledit jeu (9) de coefficients de réponse impulsionnelle hᵢ.

6. Utilisation selon la revendication 5, caractérisée en ce qu'une plage d'activation (21) de l'égaliseur (6) est définie entre deux valeurs seuil minimale (Qₘ) et maximale (Q_{M}) de qualité acceptable, ledit égaliseur (6) étant activé si ladite valeur estimée (Q) de la qualité du canal de transmission est comprise dans ladite plage d'activation (21).

7. Utilisation du dispositif (8) d'estimation de la qualité d'un canal de transmission (1) selon l'une quelconque des revendications 1 à 4, pour l'une des applications appartenant au groupe comprenant :
- l'estimation des performances d'un égaliseur (6) recevant ledit jeu (9) de coefficients de réponse impulsionnelle hᵢ ;
- le contrôle de la puissance d'émission d'un signal ; et
- le contrôle d'un changement de cellule, dans le cas d'un système de radiocommunication numérique cellulaire.
